# EUROPEAN PATENT APPLICATION

(11) **EP 3 026 873 A1**
(43) Date of publication of application: **01.06.2016**
(21) Application number: 14195340.6
(22) Date of filing: 28.11.2014
(51) Int. Cl.: H04M 1/04, H04M 1/02, H02J 7/00

(54) **Electronic smart device holder**

(71) Applicant: Alleantia S.r.l., 56025 Pontedera (PI) (IT)
(72) Inventor: Linari, Stefano, I-58024 Massa Marittima (GR) (IT)
(74) Representative: Mati, Silvia

(57) **Abstract**

There is described an electronic smart device holder, in particular a holder allowing using an electronic smart device for building or vehicle automation purposes e.g. of homes, offices, shops, caravans, etc. comprising a first holder casing (11) provided with holding means (30) adapted to retain a first smart device (20,20') inside the first casing (11) and a power supply unit (12) for supplying power at least to the first smart device (20,20') when retained inside the first casing (11) characterized in that the first holder casing (11) comprises at least one joining element (18,18',18") for fastening the first casing (11) to a wall and/or connecting it to at least one extension box (17) provided with means for fastening to a wall.

## Description

The present invention relates to an electronic smart device holder, in particular a holder allowing using an electronic smart device for building and/or vehicle automation purposes e.g. of homes, offices, shops, etc.

Throughout the present description and in the appended claims the expressions "electronic smart device" and "smart device" refer to an electronic device that supports ubiquitous computing properties and multiple tasks, like e.g. a mobile phone or tablet that can act as a phone but also as a games console, music player, camera etc., having such kind of communication capability both wired or wireless.

Throughout the present description the expression "ubiquitous computing properties" refers to properties which make computing available irrespective of one's location.

Most known examples of smart devices are smartphones, tablets, phablets, wearable gadgets etc.

Nowadays it is common to change smart devices before their product life has completely expired. In other words, users usually buy a new smart device when their old one still functions properly. The reasons why smart devices are changed before the expiry of their product life are bound to the need for always increasing performances in order to run more complex and demanding software applications or simply to commercial and aesthetic motivations.

Applicant noted that discarded smart devices can still be used for running less demanding applications and/or software, like e.g. software for building and/or vehicle automation.

Throughout the present description the expression "building and/or vehicle automation software" refers to applications for managing a plurality of electronic devices in a building, like e.g. a house, an office, a shop or in a vehicle, like e.g. a caravan.

For instance, in a house the electronic devices can comprise interface devices for turning on/off lights and/or garden irrigation, setting the alarm and/or heating system, raising and lowering shutters etc. In an office or a shop, the electronic devices can comprise interface devices for managing internal and/or external lightning, notifying a failure of the power network or of the power supplied to a specific device (e.g. fridge or vending machine) in order to provide for an alternative power source e.g. by switching on an uninterruptible power supply (UPS), etc.

Building automation is currently managed by means of control panels which are typically attached to the walls and specifically designed for this application.

Applicant considered that the smart devices which are usually discarded before having completed their product life are wholly suitable for being used as building automation control panels. In fact, such smart devices typically comprise all necessary hardware components for running these automation applications and interfacing with both the user and the building automation interface devices. In fact, smart devices usually comprise displaying means, a user input interface, e.g. a touch screen and/or a keyboard and/or voice command recognition means, wireless interfaces (e.g. Bluetooth, WLAN, Infrared etc.) which allows the wireless communication with the automation interface devices or a central management unit (eventually over the Internet), wired interfaces (e.g. a serial and/or USB port) which allows the wired communication with the automation interface devices or the central management unit (eventually over the Internet), and, mostly, also a GSM/UMTS/LTE module e.g. for receiving commands through the mobile network and make data available through the Internet.

Applicant realized that in order to use a smart device as a control panel for building automation, a suitable smart device holder has to be developed adapted to allow both a stiff but preferably releasable support in a hanged configuration attached to a wall and free access to the interfaces of the device (display, input/output interface, camera, etc.).

Accordingly, a first aspect of the present invention relates to an electronic smart device holder comprising a first holder casing provided with holding means adapted to retain a first smart device inside the first casing and a power supply unit for supplying power at least to the first smart device when retained inside the first casing characterized in that the first holder casing comprises at least one joining element for fastening the first casing to a wall and/or connecting it to at least one extension box provided with means for fastening to a wall.

The provision of smart device holder provided with a joining element for fastening the first casing of the holder to a wall - and/or to an extension box provided itself with fastening means to a wall - allows using a smart device inserted in the holder as a control panel for home automation.

This allows on the one hand exploiting smart devices for a longer period than what is nowadays usually done, thereby extending the average product life of smart devices and avoiding or at least reducing waist of correctly functioning devices. On the other hand, this also allows reducing the costs for installing home automation systems, thereby extending access to this technology to a larger portion of users.

The present invention may have at least one of the following preferred features; the latter may in particular be combined with each other as desired to meet specific implementation purposes.

Throughout the present description the expression "front side of the smart device" refers to the side bearing the display of the smart device and the expression "rear side of the smart device" refers to the side opposite to the front side.

Throughout the present description and in the appended claims the expressions "front side" and "rear side" of the casing refer to the side of the casing which can be coupled to the front and rear side of the smart device, respectively.

Preferably, the electronic smart device holder comprises a second holder casing provided with second holding means adapted to retain a second smart device inside the second casing.

More preferably, the second casing is connected to the first casing so that the rear side of the first casing adjoins the rear side of the second casing.

Advantageously, according to this embodiment it is possible to create a double screen interface by inserting a smart device into each casing of the smart device holder.

Preferably, the extension box and/or the first and/or the second casing comprises at least one between a microprocessor, a sensor, an actuator and/or an electronic or electromechanical device adapted to interact with at least one building automation interface device and to be connected to a smart device retained in the first and/or the second casing.

More preferably, the at least one between a microprocessor, a sensor, an actuator and/or an electronic or electromechanical device adapted to interact with at least one building automation interface device and to be connected to a smart device are mounted on an electronic circuit board.

Even more preferably, the electronic circuit board comprises a central through aperture for the passage of a plurality of cables.

This advantageously also facilitates the mounting of the smart device holder to a wall since it allows access to the joining element from the front side of the casing even if the joining element is usually placed at the rear side of the casing.

Even more preferably,, the electronic circuit board comprises an integrated circuit (IC) with connectivity (e.g. USB, WiFi, etc.) adapted to drive a plurality of electrical power switches (solid state or mechanical relays) to operate ON/OFF or proportional (dimming) control of a plurality of loads.

Even more preferably, the electronic circuit board comprises software means (e.g. drivers, libraries, SDK, etc.) for connecting the integrated circuit to at least one smart device inserted in at least one of the first and/or the second casing in order to make it available for automation applications.

Preferably, the extension box and/or the first and/or the second casing comprises at least one wired communication interface (e.g.: serial RS232 / RS422 / RS485, powerline / X10, KNX, Dali, etc.). This usefully allows connecting the smart device to the building automation interface devices in order to get status data from or send commands to the same.

More preferably, at least one communication interface of the extension box and/or first and/or the second casing is connected to a communication interface of the smart device (e.g. USB port) when the smart device is retained inside the first and/or the second casing.

Preferably, the smart device holder further comprises at least one covering element adapted to be connected to the first and/or second casing at its front side for partially overlapping and hiding a display of a smart device retained inside the first and/or second casing.

Advantageously, by using a covering element specially conceived for a specific software or application it is possible to define areas of the display to which the user has access in order to visualize or set data e.g. useful for a specific automation application. In fact, the cover allows direct access just to some parts of the display and prevents access to other parts.

More preferably, the at least one covering element is hinged to the first and/or second casing.

Preferably, connectors for releasably fastening the at least one covering element to the front side of the first and/or second casing are provided on the covering element and/or the first and/or second casing.

This allows simply and quickly changing the covering element in case a different software application is run on the smart device, e.g. if the smart device is converted for performing a different automation function.

More preferably, the connectors for fastening the at least one covering element to the front side of the first and/or second casing are of the quick release type, like e.g. of the latch or magnetic type.

In case the connectors for fastening the covering element to the front side of the first and/or second casing are of the magnetic type or comprise magnets, and are provided on the covering element, a smart device provided with corresponding magnetic field sensors can advantageously detect the condition in which the covering element is mounted on the first and/or second casing and trigger the start of specific functions accordingly.

According to a different embodiment, the connectors for fastening the at least one covering element to the front side of the first and/or second casing comprise locking means which prevent the cover to be removed by unauthorized personnel.

This advantageously avoids that the smart device is stolen or damaged and makes it possible to use the electronic smart device according to the invention in public environments.

Preferably, the at least one covering element comprises an RFID or, preferably, an NFC tag containing information relating to the covering element configuration.

Advantageously, the smart device contained into the corresponding casing reads the data stored into the tag and, based on the read data, recognizes the specific covering element attached to the casing and runs a corresponding application.

Preferably, the holding means are of the releasable type in order to removably retain a smart device inside the first and/or second casing.

According to an advantageous embodiment, the holding means are of the adjustable type in order to adapt to a plurality of different dimensions of smart devices.

This usefully allows using a same holder with a plurality of smart devices so that, in case the smart device is substituted, it is not required to remove the holder from the wall in order to substitute the same as well.

Preferably, the holding means are of the latching type adapted to achieve a snap fit coupling with a smart device.

According to a further advantageous embodiment, the first and/or second casing is frame shaped. This usefully allows reaching the smart device from both the front and the rear side and also improves aeration of the smart device thereby assuring appropriate heat dissipation and cooling of the smart device and of the power supply.

Alternatively, the first and/or second casing is box-shaped with one open side, said open side being the holder casing front side. According to this embodiment, the first and/or second casing comprises a rear wall.

More preferably, the lateral sides of the first and/or second casing are grid-shaped in order to further improve aeration of the inside of the first casing.

Even more preferably, inside the first and/or second casing, a venting element is provided in order to achieve a cooling of the smart device and further electronic components present inside the casing by forced draught.

Preferably, the joining element for fastening the first casing to a wall and/or to an extension box is provided at the rear side of the first casing.

More preferably, the joining element comprises at least a plurality of holes provided in the rear surface of the first casing or in a wall adapted to be connected to the rear face of the first casing.

Preferably, the first casing has dimensions comparable to the standard dimensions defined for flush mounting boxes like e.g. in CEI EN 60670-1. Also, the holes are positioned as defined e.g. in CEI EN 60670-1 in order for the first casing to be connectable to the flush mounting boxes already mounted into the walls.

This advantageously, allows the holder easily accessing the power network since the flush mounted boxes are usually installed into the walls to host electric power switches or sockets. Furthermore, the holder can be installed without the need of dulling new holes into the wall.

Thus, the most convenient installation of the holder can be performed e.g. by replacing a switching group usually present in a building. In this case the smart device inserted into the holder is used amongst others to implement the switching function of the removed switching group.

Alternatively, the joining element for fastening the first casing to a wall and/or to an extension box is provided at a lateral side of the first casing.

Preferably, the joining element comprises an articulated connection in order to pivotally connect the first casing to the wall and/or to an extension box.

More preferably, the articulated connection is adapted to connect the first casing to the wall and/or to an extension box so that the first casing is free to rotate around a first axis of rotation, e.g. parallel to the wall.

Alternatively or in addition, the articulated connection is adapted to connect the first casing to the wall and/or to an extension box so that the first casing is free to rotate around a second rotation axis orthogonal to the first rotation axis.

Preferably, the joining element for fastening the first casing to a wall is an electric plug firmly connected to the first casing or to an element (e. g. a plate) adapted to be connected to the first casing, thereby achieving both a mechanical connection of the holder to the wall and an electrical connection of the holder to the power network.

This advantageously makes it unnecessary to drill holes into the wall for installing the holder and also allows easily moving the holder from a plug socket to the other.

As a further alternative, the joining element comprises a plurality of adhesive foils provided in the rear surface of the first casing or in a wall adapted to be connected to the rear face of the first casing.

Preferably, the power supply unit is a switched-mode power supply (SMPS) connected to electric wires for connection to the power network. This advantageously assures a substantially constant full charge of the battery of the smart device making it very unlikely that a condition of low charge of the battery is reached. This also usefully allows detecting possible failures of the power network of the building and signalling the malfunction.

Alternatively, the power supply unit is a battery pack comprising at least one battery and/or a renewable energy generator, like e.g. a photovoltaic solar panel or a micro wind turbine.

This advantageously allows installing the holder everywhere without the need to plug into the power network, even outdoor with appropriate environmental protection. Outdoor and landfill applications are suitable to connect different sensors for environmental and pollution monitor or machine control.

Preferably, the first and/or the second casing are made of metallic, plastic material or synthetic or biological compositions, more preferably of recycled plastic material or synthetic or biological compositions.

A second aspect of the present invention relates to an assembly comprising an electronic smart device and a smart device holder as described above.

Preferably, the at least one covering element comprises at least a through opening with smaller dimensions than a display of the electronic smart device, the covering element being connected to the first and/or the second casing so that the at least one through opening overlaps at least a portion of the display.

More preferably, the at least one covering element comprises a plurality of embossments containing information for visually impaired users, like e.g. signs of the braille writing system or specific symbols.

This advantageously provides for a visual and tactile guide for the user in order to reach the areas of the display which are actually used by the software or application for automation purposes even when the smart device is in standby mode with display switched off or with very low brightness. The smart device can be for instance programmed so as to brighten its screen upon being touched and/or give an audio feedback. Holes can be used to delimitate tactile input area and/or status information.

Preferably, the covering element comprises a plurality of additional through holes, the covering element being connected to the first and/or second casing so that the at least one through hole allows direct access to one or more user interfaces of the smart device, the user interfaces comprising at least one element chosen from the group consisting of a microphone, a keyboard, a button, a visual indicator, a loudspeaker, a camera and/or a sensor.

Preferably, on the outer surface of the covering element, printed and/or embossed and/or labelled scales, texts and pictograms are provided for facilitating the reading and setting of the measured parameters.

More preferably, on the inner surface additional information is provided (printed or labelled) relating to instructions to use and settings of the application which is run in connection with the cover.

Throughout the present description the expression "outer surface" of the covering element refers to the surface which in use, mounted on the casing, faces towards the outside of the casing; the expression "inner surface" of the covering element refers to the surface opposite to the outer surface.

With reference to the attached drawings, further features and advantages of the present invention will be shown by means of the following detailed description of some of its preferred embodiments. According to the above description, the several features of each embodiment can be unrestrictedly and independently combined with each other in order to achieve the advantages specifically deriving from a certain combination of the same.

In the said drawings,
- fig. 1 is a perspective view of a smart device holder in accordance with a first embodiment of the present invention, in its assembled configuration;
- fig. 2 is an exploded view of the smart device holder of figure 1 taken from the front;
- fig. 3 is an exploded view of the smart device holder of figure 1 at an installing position;
- fig. 4 is a perspective view of a smart device holder in accordance with a second embodiment of the present invention, in its assembled configuration;
- fig. 5 is an exploded view of the smart device holder of figure 4 taken from the front;
- fig. 6a and 6b are perspective views of a smart device holder in accordance with a third embodiment of the present invention, in two different configurations;
- fig. 7 is an exploded view of the smart device holder of figure 6a taken from the front;
- fig. 8 is an exploded view of a smart device holder in accordance with a variant of the first embodiment of the present invention;
- fig. 9 is an exploded view of a smart device holder in accordance with a variant of the second embodiment of the present invention;
- fig. 10a and 10b are perspective views of a smart device holder in accordance with a variant of the third embodiment of the present invention.

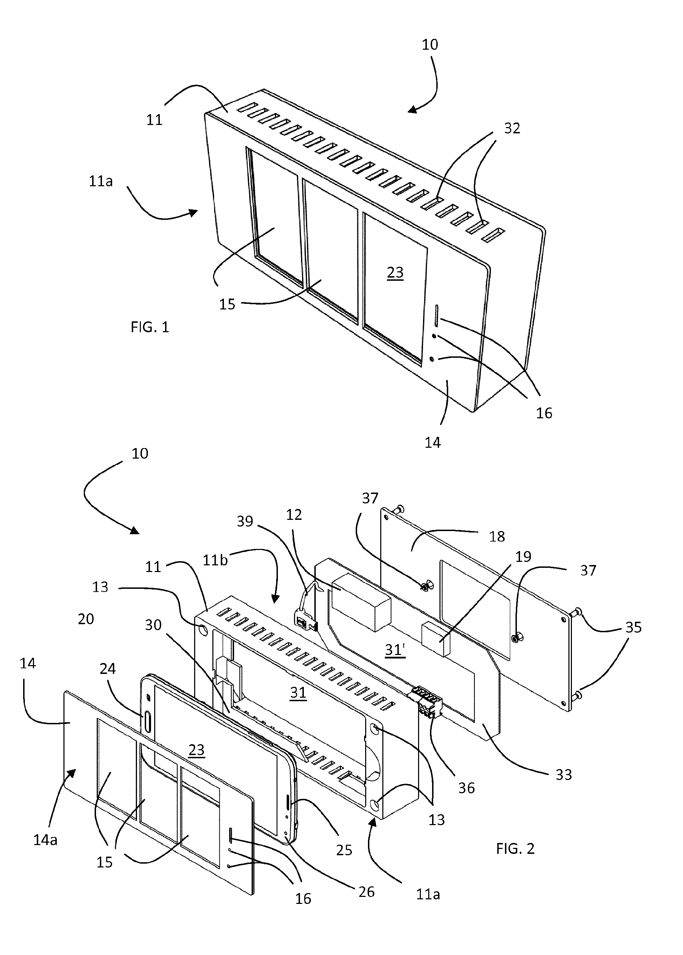

In fig. 1 and 2 an electronic smart device holder according to a first embodiment of the present invention is globally indicated with 10. The holder 10 comprises a first holder casing 11 provided with holding means 30 adapted to firmly but removably retain a first smart device 20 inside the first casing 11. The holding means 30 are preferably of the adjustable type in order to adapt to the dimensions of a plurality of different smart devices.

The holding means 30 depicted in figure 2 are resilient projections or walls which implement holding means of the latching type adapted to achieve a snap fit coupling with the smart device 20. This allows a quick insertion and release of the smart device into/from the casing 11 without the need of special tools.

As shown in fig. 2, the casing 11 is frame shaped with a through opening 31 positioned substantially in the middle of the casing 11 and extending from the front to the rear side 11a, 11b of the casing 11 in order to allow access and natural ventilation to the smart device 20 from both, the front and the rear side of the same 20.

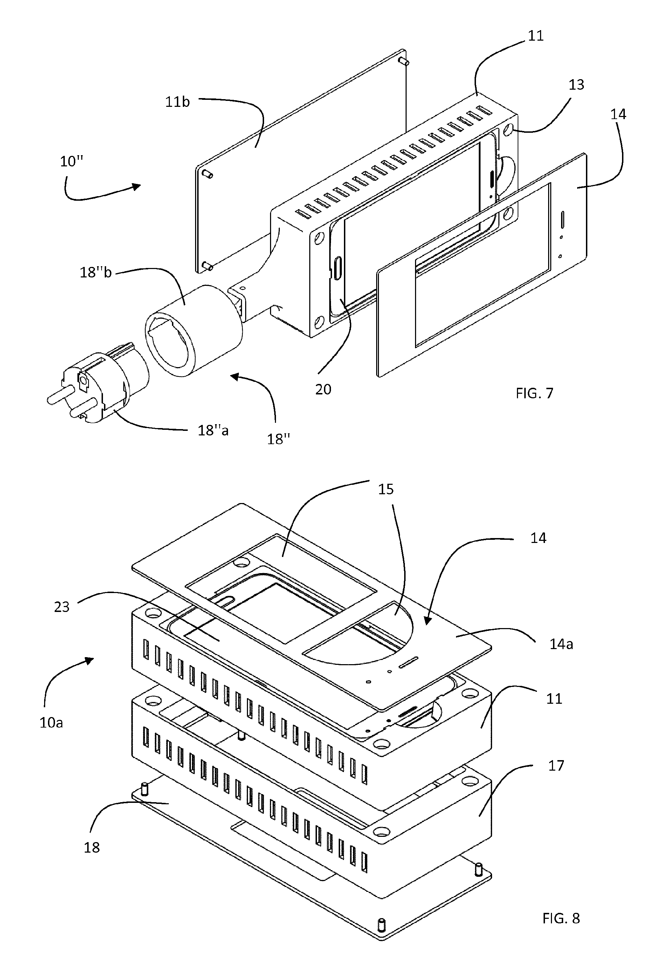

According to a further embodiment (shown in figure 7), the holder casing 11 is box-shaped with just one open side in order to allow access to the front side of the smart device 20, namely the side bearing the display 23.

Inside the casing 11, a power supply unit 12 for supplying power to the smart device 20 is provided. Advantageously, the power supply unit 12 is carried by and connected to an electronic circuit board or PCB 33. The PCB 33 also preferably comprises a communication interface 39 for connecting to the smart device 20 once retained into the casing 11. The PCB 33 further comprises at least one terminal block 36 for the connection to the electric power network and optionally the input/output switch connections. Therefore, the electronic circuit board 33 advantageously comprises a central through aperture 31' which allows the passage of the cables 21 for connecting the terminal block 36 to the electric power network.

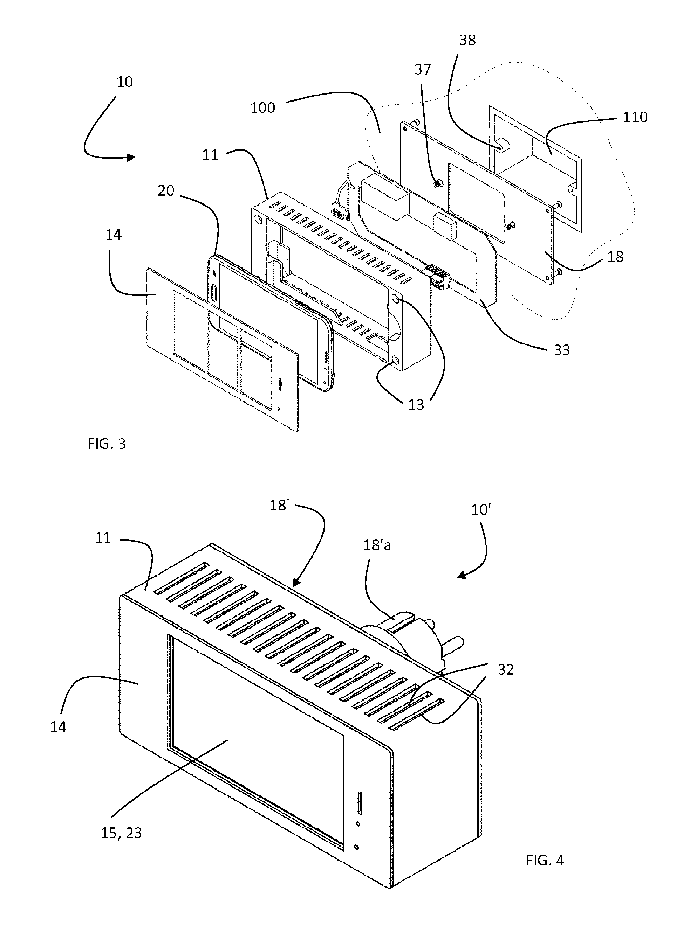

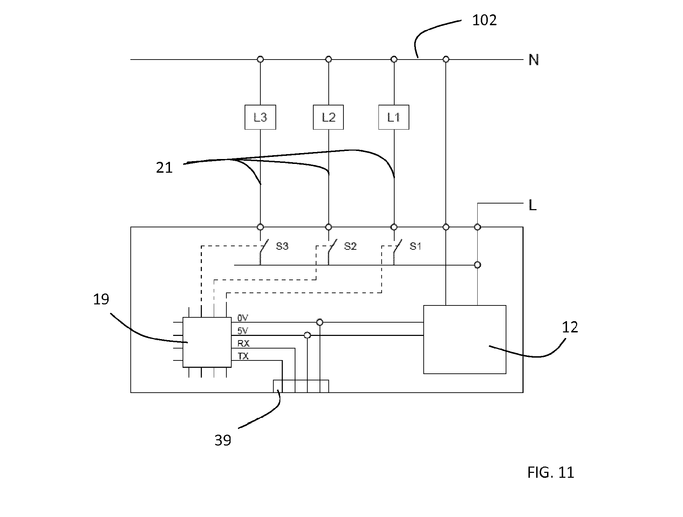

In the depicted embodiments, the power supply unit 12 is a switched-mode power supply which can be connected to the power network by means of electric cables 21 (schematically shown in figure 11) or a plug as shown e.g. in fig. 4.

According to an alternative embodiment (not shown), the power supply unit 12 comprises a battery pack.

According to a further alternative embodiment (not shown), the power supply unit 12 comprises a renewable power source like e.g. a photovoltaic solar panel or a micro wind turbine.

Preferably, the casing 11 also comprises a plurality of lateral openings 32 in order to further improve the natural ventilation of the rear side of the smart device 20 and the electronic components provided on the PCB 33.

The casing 11 preferably also comprises at least one communication interface (not shown) like e.g. a serial communication port, a USB communication port, a powerline communication interface and/or an Ethernet interface.

Preferably, the power supply unit 12 provided in the casing 11 is also connected to the communication interfaces of the casing 11 in order to supply power also to the devices connected to the same, if necessary.

More preferably, the power supply unit 12 complies with the USB Power Delivery revision 2.0 or 3.0 specification. This advantageously allows implementing the power supply unit by means of integrated chips, thereby optimizing overall costs and size of the smart device holder.

Furthermore, the PCB 33 preferably comprises at least two USB ports (not shown) and functions as a USB hub.

The holder 10 advantageously also comprises at least a covering element 14 adapted to be connected to the front side 11a of the casing 11 for partially hiding the display 23 of the smart device 20 contained inside. Therefore, the covering element 14 comprises at least a through opening 15 having equal or smaller dimensions than the display 23 and being located so as to overlap in use at least a portion of the display 23.

Advantageously, the covering element 14 allows direct access just to the part of the display 23 which is used for automation purposes. By way of an example, it is supposed that the smart device 20 runs an application for the control and management of the heating system of the house. In this case, a first portion of the display 23 can be used to show the current room temperature as a number, a second portion of the display 23 can be used to show a timer with respect to a vertical slider in order to set the time when the heating system must be turned on, and a third portion can be used to show a scale of temperatures which a user can set e.g. by touching a slider displayed in the said third display portion. According to this example, the covering element 14 comprises three through openings 15 having the shape and dimensions of the screen portions involved in the display for visualizing and setting the temperature data and timer.

In addition, the covering element 14 preferably comprises a plurality of additional through holes 16 for the direct access to one or more user interfaces of the smart device 20 like e.g. a microphone 24, a keyboard, buttons, a LED visual indicator, a loudspeaker 25, a camera 26 and other sensors if provided.

The covering element 14 is fastened to the front side of the casing 11 of the holder 10 by means of connectors 13 which provide a releasable connection between the two elements 11,14, like e.g. magnets and/or latches. The connectors are provided on either the covering element 14, the casing 11 or both. In the embodiments shown in the figures, the connectors 13 are magnets provided on the front side 11a of the casing 11.

The covering element 14 also preferably shows on its outer surface 14a, namely the surface facing towards the outside, one or more scales, pictograms etc. (not shown) for facilitating the reading and setting of the measured parameters.

At its rear side 11b, the casing 11 comprises at least a joining element 18 for the fastening to a wall or the connection to one or more extension boxes 17 (as shown in figure 8). The joining element 18 comprises at least a wall provided with a plurality of holes. As shown in figure 2 and 3, a first group of holes of the joining element 18 is preferably adapted for the passage of connection means 35, like e.g. screws, for the coupling of the joining element 18 to the casing 11. Additionally, a second group of holes of the joining element 18 is preferably adapted for the passage of screws 37 to be coupled to holes 38 provided in the wall or in flush mounting boxes 110 mounted in the wall 100.

Alternatively, the joining element 18 comprises a plurality of adhesive foils for directly bonding the casing 11 to the wall (not shown).

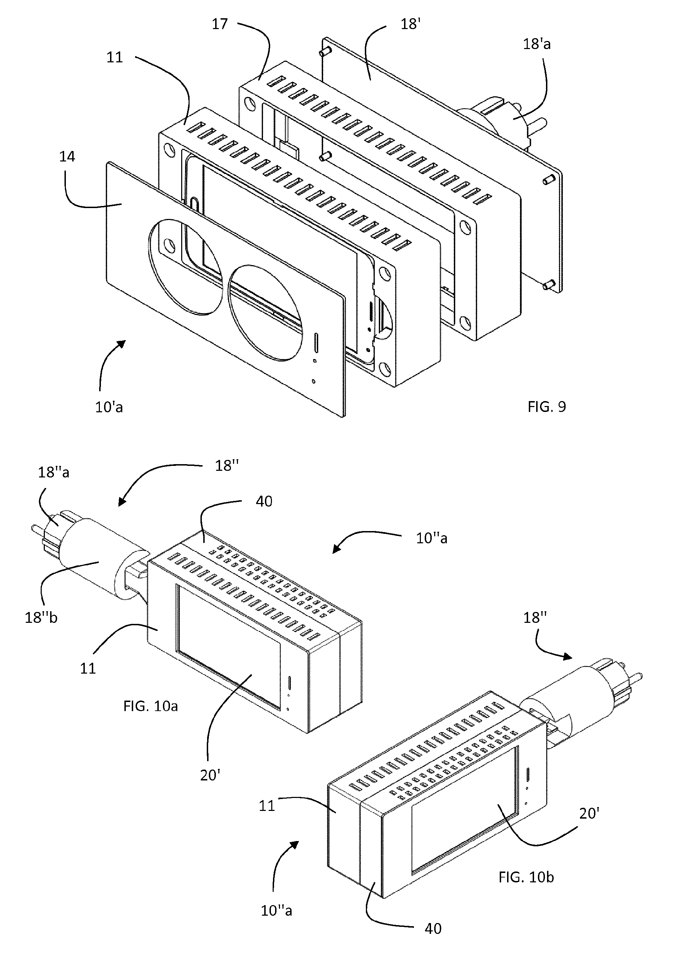

Advantageously, at least one between a sensor, an actuator and/or an electronic or electromechanical device (not shown) adapted to interact with the home automation interface devices are preferably provided inside the first casing 11 or the extension box 17. The said elements receive status data from the said devices and/or send commands to the same. Preferably, the above elements are connected to a microprocessor 19 which processes the received status data and commands. The microprocessor 19 is preferably provided inside the first casing 11, e.g. implemented on the PCB 33, but alternatively it can be provided inside the extension box 17 or in a second casing 40 (as shown in figures 10a and 10b).

Preferably, the power supply unit 12 provided in the first casing 11 is also connected to the microprocessor 19, sensors, actuators and/or electronic or electromechanical devices in order to supply power to the same.

The microprocessor 19 of the electronic circuit board 33 is adapted to drive a plurality of electrical power switches (solid state or mechanical relays) to operate ON/OFF or proportional (dimming) control of a plurality of loads. An electric layout of the connection to the power network 102 in order to operate as electrical power switch is schematically shown in figure 11.

In a variant of the first embodiment of the invention, shown in figure 8, the joining element 18 comprises a rear wall provided with holes and screws for connection to an extension box 17. On its turn, the extension box 17 comprises on its side opposite to the side facing the casing 11 a joining element 18 as above described for the fastening to the wall or the connection to a further extension boxes (not shown).

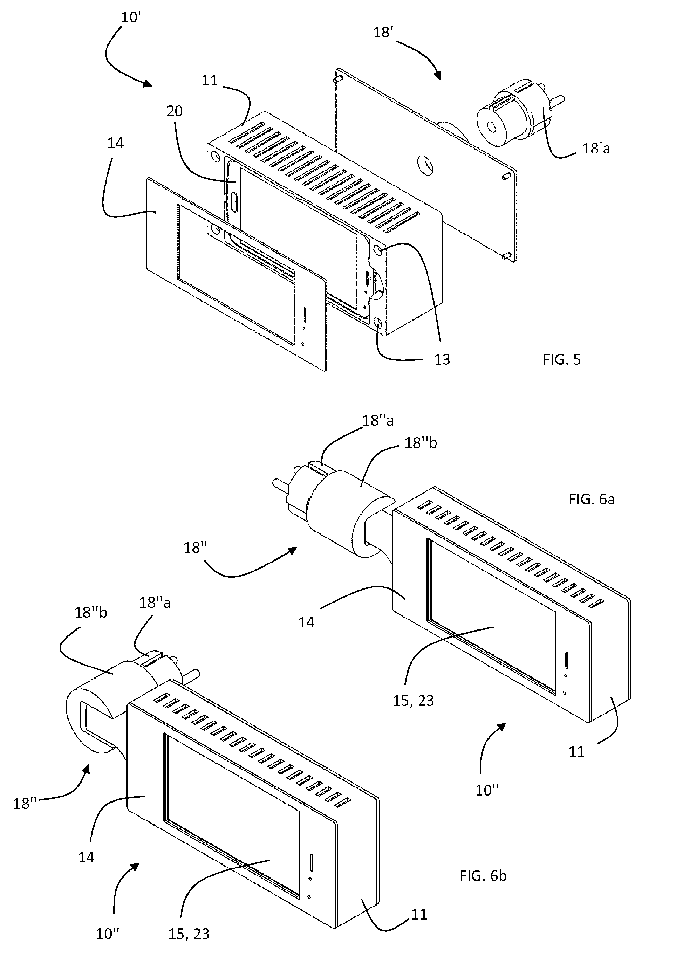

In fig. 4 and 5 an electronic smart device holder according to a second embodiment of the present invention is globally indicated with 10'.

Different from the smart device holder 10 of figures 1-3, the joining element 18' of the smart device holder 10' according to the second embodiment comprises a plug 18'a adapted to be inserted into a corresponding socket of the electric power network. The plug 18'a is formed on the rear side of a wall closing the casing 11 from the back.

According to further (not shown) embodiments, the plug 18'a can be shaped according to a different plug standard as the one shown in figures 1-3, providing a voltage level and frequency (AC/DC) specific of the power supply unit used. By way of an example, the plug 18'a can be shaped as a 12V car cigarette lighter and the power supply unit is a DC/DC converter. This specific embodiment is particularly convenient for use in a vehicle of the smart device holder according to the invention.

In a variant of the second embodiment of the invention, shown in figure 9, the casing 11 is provided with a joining element 18 comprising a rear wall provided with holes and screws for connection to an extension box 17. On its turn, the extension box 17 is provided on its rear side with a plug 18'a adapted to be inserted into a corresponding socket of the electric power network.

In fig. 6a, 6b and 7 an electronic smart device holder according to a third embodiment of the present invention is globally indicated with 10". Different from the above described embodiments, the casing 11 of the smart device holder according to a third embodiment comprises a rear wall which closes its rear face 11b.

The joining element 18" of the smart device holder 10" according to the third embodiment comprises a plug 18"a adapted to be inserted into a corresponding socket of the electric power network, which is laterally connected to the casing 11 of the smart device holder 10".

Furthermore, the plug 18"a of the third embodiment is preferably connected to the casing 11 in a pivotable manner so as to be able to position the smart device holder 10" with respect to the socket in the best suitable configuration according to the specific use (see fig. 6a and 6b). Particularly, the plug 18"a of the third embodiment is connected to the casing 11 by interposition of a pivotable joint 18"b.

Figure 10 shows a variant of the third embodiment of the present invention in which the first casing 11 is connected at its rear side 11b to a second holder casing 40 provided with holding means (not shown) adapted to firmly but removably retain a second smart device 20' inside the second casing 40.

According to this variant, the joining element 18" of the smart device holder 10" comprises a plug 18"a adapted to be inserted into a corresponding socket of the electric power network, which is laterally and preferably pivotally connected to both casings 11,40 of the smart device holder 10".

## Claims

1. Electronic smart device holder (10,10',10") comprising a first holder casing (11) provided with holding means (30) adapted to retain a first smart device (20) inside the first casing (11) and a power supply unit (12) for supplying power at least to the first smart device (20) when retained inside the first casing (11) **characterized in that** said first holder casing (11) comprises at least one joining element (18,18',18") for fastening the first casing (11) to a wall and/or connecting it to at least one extension box (17) provided with means for fastening to a wall.

2. Electronic smart device holder (10,10',10") according to claim 1 wherein it further comprises a second holder casing (40) provided with second holding means adapted to retain a second smart device (20') inside the second casing (40).

3. Electronic smart device holder (10,10',10") according to claim 1 or 2 wherein the first (11) and/or second (40) casing and/or the extension box (17) comprises at least one between a microprocessor (19), a sensor, an actuator and/or an electronic or electromechanical device adapted to interact with at least one home automation interface device and to be connected to a smart device (20,20') when retained in the first (11) and/or second (40) casing mounted on an electronic circuit board comprising a central through aperture (31').

4. Electronic smart device holder (10,10',10") according to any of the previous claims wherein it further comprises at least one covering element (14) adapted to be connected to the first (11) and/or second (40) casing at its front side (11a) for partially overlapping and hiding a display (23) of a smart device (20,20') contained inside the first (11) and/or second (40) casing.

5. Electronic smart device holder (10,10',10") according to claim 4 wherein connectors for releasably fastening the covering element (14) to the front side (11a) of the casing (11,40) are provided on the covering element (14) and/or the casing (11,40).

6. Electronic smart device holder (10,10',10") according to any of the previous claims wherein the holding means (30) are of the releasable type adapted to achieve a removable coupling with a smart device (20,20').

7. Electronic smart device holder (10,10',10") according to any of the previous claims wherein the casing (11,40) is frame shaped.

8. Electronic smart device holder (10,10',10") according to any of the previous claims wherein the joining element (18,18',18") for fastening the first casing (11) to the wall and/or to the at least one extension box (17) is provided at the rear side or at a lateral side of the first casing (11) or of the at least one extension box (17).

9. Electronic smart device holder (10,10',10") according to any of the previous claims wherein the joining element (18") is pivotally connected to the first casing (11) and/or to the at least one extension box (17).

10. Electronic smart device holder (10,10',10") according to any of the previous claims wherein the joining element (18',18") comprises a plug (18'a, 18"a) for the connection to a socket of the electric power network.

11. Electronic smart device holder (10,10',10") according to any of claims 1 to 8 wherein the joining element (18) comprises at least a plurality of holes provided in a rear wall of the first casing (11) or in a wall adapted to be connected to the rear face (11b) of the first casing (11).

12. Electronic smart device holder (10,10',10") according to any of the previous claims wherein the power supply unit (12) is a switched-mode power supply.

13. Electronic smart device holder (10,10',10") according to any of claims 1 to 11 wherein the power supply unit (12) is a battery pack comprising at least one battery.

14. Assembly (10,10',10",20,20') comprising at least an electronic smart device (20,20') and a smart device holder (10,10',10") according to any of the previous claims.

15. Assembly (10,10',10",20,20') according to claim 14 wherein the at least one covering element (14) comprises at least one through opening (15) with smaller dimensions than a display (23) of said at least one electronic smart device (20,20'), the covering element (14) being connected to the casing (11,40) so that the at least one through opening (15) overlaps at least a portion of the display (23).
